# EUROPEAN PATENT APPLICATION

(11) **EP 4 597 345 A1**
(43) Date of publication of application: **06.08.2025**
(21) Application number: 23872343.1
(22) Date of filing: 26.09.2023
(51) Int. Cl.: G06F 21/55, G06F 21/57

(54) **INFORMATION PROCESSING DEVICE, INFORMATION PROCESSING SYSTEM, INFORMATION PROCESSING PROGRAM, AND INFORMATION PROCESSING METHOD**

(30) Priority: 30.09.2022 JP 2022158053
(71) Applicant: DENSO CORPORATION, Kariya-city, Aichi-pref., 448-8661 (JP)
(72) Inventor: IKUSE, Tomonori, Kariya-city, Aichi-pref., 448-8661 (JP); EGAWA, Masumi, Kariya-city, Aichi-pref., 448-8661 (JP); ABE, Taiji, Kariya-city, Aichi-pref., 448-8661 (JP); UTSUNOMIYA, Hiroyuki, Kariya-city, Aichi-pref., 448-8661 (JP); NAGARA, Keigo, Kariya-city, Aichi-pref., 448-8661 (JP)
(74) Representative: Winter, Brandl - Partnerschaft mbB
(86) International application number: PCT/JP2023/034946
(87) International publication number: WO 2024/071120

(57) **Abstract**

An information processing device includes: a log acquisition unit 112 acquiring a security log indicating an anomaly occurred in a vehicle, a log analysis unit 122 determining whether to instruct a verification unit of the vehicle to execute an integrity verification for verifying an integrity of an in-vehicle unit based on the security log; a verification instruction unit 140 instructing the verification unit to execute the integrity verification in response to the log analysis unit determining to instruct the verification unit to execute the integrity verification; an intrusion determination unit 124 determining whether the in-vehicle unit is intruded based on a result of the integrity verification executed by the verification unit; and an attack estimation unit 126 performing an estimation of an attack, which is a cause of intrusion, based on the security log and a result of intrusion determination obtained from the intrusion determination unit.

## Description

### CROSS REFERENCE TO RELATED APPLICATION

This application is based on Japanese Patent Application No. 2022-158053 filed on September 30, 2022, the disclosure of which is incorporated herein by reference.

### TECHNICAL FIELD

The present disclosure relates to a technology for estimating attacks against vehicles based on security logs that indicate anomalies occurring in the vehicle.

### BACKGROUND ART

The following Patent Literature 1 describes a technique for estimating an attack on a vehicle, which may cause an anomaly in the vehicle, based on a security log indicating an anomaly occurred in the vehicle.

### PRIOR ART LITERATURES

### PATENT LITERATURE

Patent Literature 1: JP 2020-123307 A

### SUMMARY

A security log indicates an anomaly occurred in the vehicle due to the attack on the vehicle and intrusion of the attack into the vehicle. The security log may also indicate an anomaly occurred in the vehicle due to a cause other than the attack on the vehicle and intrusion of the attack into the vehicle.

After performing detailed study, the inventors of the present disclosure found that when estimation of attack on a vehicle is performed based on the security log that indicates an anomaly occurred in the vehicle due to a cause other than the attack on the vehicle and intrusion of the attack into the vehicle, the estimation accuracy of attack may decrease.

One aspect of the present disclosure is to provide a technique for improving an estimation accuracy of attack when the vehicle receives an attack.

According to an aspect of the present disclosure, an information processing device includes a log acquisition unit, a log analysis unit, a verification instruction unit, an intrusion determination unit, and an attack estimation unit.

The log acquisition unit acquires a security log indicating an anomaly occurred in a vehicle. The log analysis unit determines whether to instruct a verification unit (18, S17 to S19) of the vehicle to execute an integrity verification for verifying an integrity of an in-vehicle unit based on the security log acquired by the log acquisition unit. The verification instruction unit instructs the verification unit to execute the integrity verification in response to the log analysis unit determining to instruct the verification unit to execute the integrity verification for the in-vehicle unit.

The intrusion determination unit determines whether the in-vehicle unit is intruded based on a result of the integrity verification executed by the verification unit. The attack estimation unit performs an estimation of an attack, which is a cause of intrusion, based on the security log and a result of intrusion determination obtained from the intrusion determination unit.

According to another aspect of the present disclosure, an information processing program causes a computer to function as the information processing device described above.

According to another aspect of the present disclosure, an information processing method is executed by the information processing device described above.

According to another aspect of the present disclosure, an information processing system includes an in-vehicle information processing device mounted on a vehicle and an external information processing device, which is located outside the vehicle and communicates with the in-vehicle information processing device.

The in-vehicle information processing device includes a monitoring unit and a verification unit (18, S17 to S19). The monitoring unit generates a security log indicative of an anomaly occurred in the vehicle. The verification unit executes an integrity verification for an in-vehicle unit.

The external information processing device includes a log acquisition unit, a log analysis unit, a verification instruction unit, an intrusion determination unit, and an attack estimation unit.

The log acquisition unit acquires the security log from the in-vehicle information processing device. The log analysis unit determines whether to instruct the verification unit to execute the integrity verification for the in-vehicle unit based on the security log acquired by the log acquisition unit. The verification instruction unit instructs the verification unit to execute the integrity verification in response to the log analysis unit determining to instruct the verification unit to execute the integrity verification.

The intrusion determination unit determines whether the in-vehicle unit is intruded based on a result of the integrity verification executed by the verification unit. The attack estimation unit performs an estimation of an attack, which is a cause of intrusion, based on the security log and a result of intrusion determination obtained from the intrusion determination unit.

According to another aspect of the present disclosure, an information processing method is executed by the information processing system described above.

According to the above configurations, it is possible to determine, with a high accuracy, whether the in-vehicle unit receives an attack intrusion when the vehicle is subjected to an attack, based on the verification result to the integrity of in-vehicle unit verified based on the security log.

As a result, an attack on the vehicle can be estimated with high accuracy based on the security log, which indicates an anomaly caused by the attack intrusion, and a result of intrusion determination, which indicates whether the in-vehicle unit has been intruded by an attack on the vehicle.

### BRIEF DESCRIPTION OF DRAWINGS

FIG. 1 is a block diagram showing a configuration of an information processing system.
FIG. 2 is a block diagram showing a configuration of multi-layer defense in a vehicle.
FIG. 3 is a block diagram showing a configuration of an in-vehicle information processing device.
FIG. 4 is a block diagram showing a configuration of an information processing device outside the vehicle.
FIG. 5 is an explanatory diagram showing a configuration of a security log.
FIG. 6 is a block diagram showing a configuration of an analysis unit of an information processing device outside the vehicle.
FIG. 7 is a diagram showing a configuration of an anomaly attack table before change.
FIG. 8 is a sequence diagram showing an information processing.
FIG. 9 is a diagram showing a configuration of an anomaly attack table after change.

### DESCRIPTION OF EMBODIMENTS

The following will describe an embodiment of the present disclosure with reference to the drawings.

### (1. Configuration)

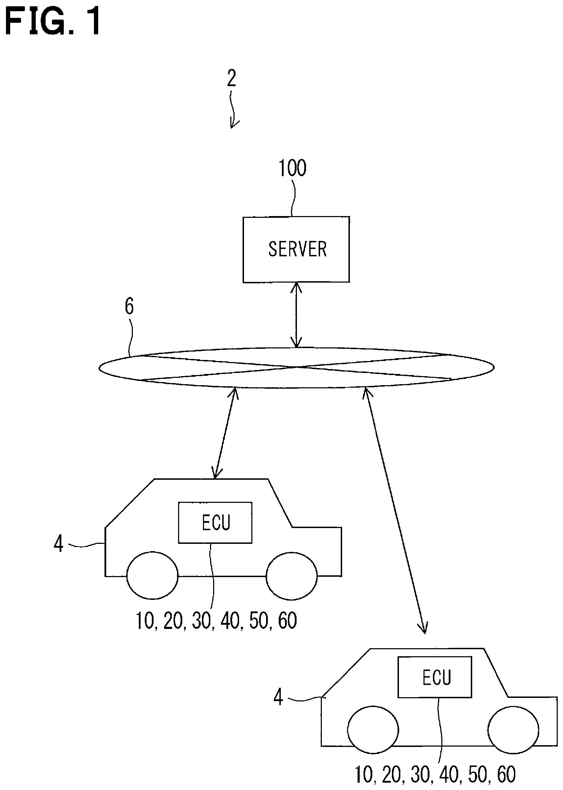

As shown in FIG. 1, an information processing system 2 of the present embodiment includes ECUs 10, 20, 30, 40, 50, and 60, which correspond to information processing devices mounted on a vehicle 4, and a server 100, which corresponds to an information processing device outside the vehicle. The ECU is an abbreviation for electronic control unit. At least one of the ECUs 10, 20, 30, 40, 50, 60, the vehicle 4, and the server 100 communicate with one another, for example, via a wireless communication network 6.

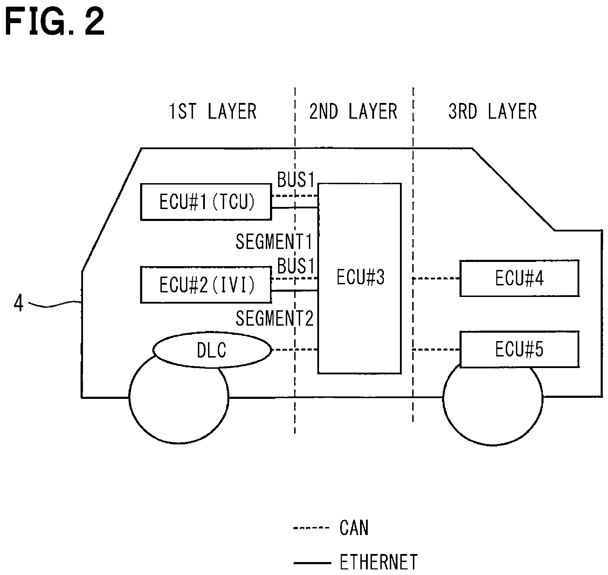

The vehicle 4 adopts a multi-layer defense system with different security levels to enhance security against external malicious attacks such as cyberattacks. In the example of multi-layer defense system shown in FIG. 2, the vehicle 4 has three defense layers including a first layer, a second layer, and a third layer.

In FIG. 2, ECU#1, ECU#2, and DLC are included in the first layer, ECU#3 is included in the second layer, and ECU#4 and ECU#5 are included in the third layer. DLC stands for Data Link Connector. The ECUs can communicate with one another via CAN or Ethernet network. CAN is an abbreviation for Controller Area Network. CAN and Ethernet are registered trademarks.

The ECU #1 and ECU #2 included in the first layer function as, for example, a TCU and an IVI having communication function with the outside of the vehicle 4. TCU stands for Telematics Control Unit, and IVI stands for In Vehicle Infotainment. ECU#1 and ECU#2 each is equipped with a security function for monitoring data, which enters from the outside of vehicle to the inside of vehicle.

For example, an external tool, which acquires diagnostic information from an OBD 2 (not shown) of the vehicle 4, is connected to the DLC included in the first layer. OBD stands for On Board Diagnostics.

For example, ECU #3 included in the second layer is a gateway ECU equipped with a security function that monitors data communicated between the (i) network of ECU #1 and ECU #2 in the first layer and (ii) the network of ECU #4 and ECU #5 in the third layer.

The ECU #3 implements security measures different from those of the ECU #1 and ECU #2 described above. An area monitored by the ECU #3 has a different security level than the first layer, which is an area protected by the ECU #1 and the ECU #2.

For example, the ECUs #4 and #5 included in the third layer are vehicle control ECUs that control the movement of the vehicle 4. Only when the data passes the security check of ECU#3 in the second layer, the data is communicated to the ECU#4 and the ECU#5. The third layer is an area that has a different security level than that of the second layer.

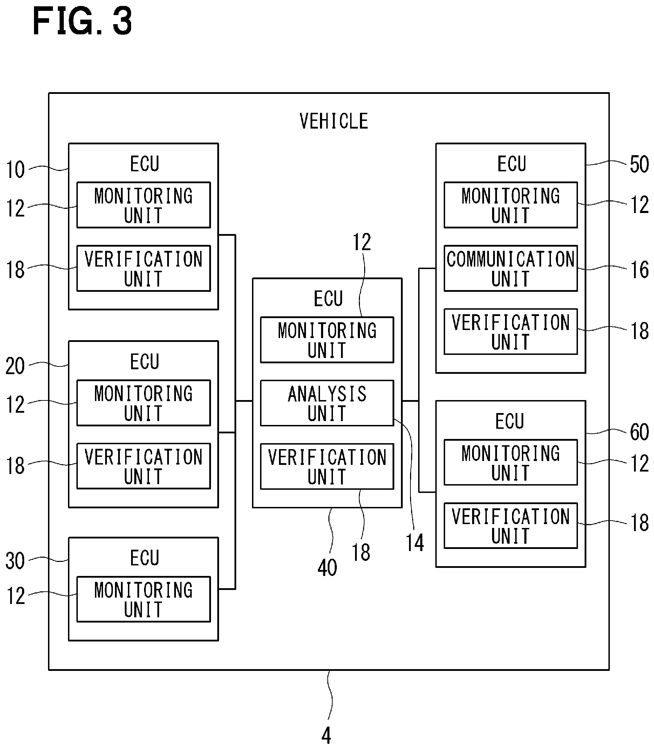

FIG. 3 shows a configuration example of the ECUs 10, 20, 30, 40, 50, and 60 mounted on the vehicle 4. As described above, the configuration of security function may differ depending on the ECUs 10, 20, 30, 40, 50, and 60.

The ECUs 10, 20, 30, 40, 50, and 60 each includes a microcomputer having a CPU, a ROM, a RAM, a flash memory, and the like (not shown). The CPU of each ECU 10, 20, 30, 40, 50, 60 executes a program stored in the ROM or flash memory, thereby performing information processing by a monitoring unit 12 and a verification unit 18, which will be described later.

The monitoring unit 12 has a security sensor that detects an anomaly of in-vehicle units, such as the ECUs 10, 20, 30, 40, 50, 60 and the network. The monitoring unit 12 monitors whether an anomaly has occurred in the in-vehicle unit. When the monitoring unit 12 detects an anomaly in the in-vehicle unit, the monitoring unit generates a security log.

The monitoring unit 12 includes, as a security sensor, a firewall, a HIDS, an IDS for detecting anomalies in a network such as CAN or Ethernet, an Auth function, or the like. HIDS is an abbreviation for Host Based Intrusion Detection System. IDS is an abbreviation for Intrusion Detection System. Auth is an abbreviation for Authentication.

An analysis unit 14 analyzes whether there is a possibility that the security log generated by the monitoring unit 12 is generated as a result of an attack on the vehicle 4.

For example, when the security log indicates that the communication cycle of data on the network of vehicle 4 is out of sync and a process that is normally in deactivated state is activated in the ECU, the analysis unit 14 determines that an attack on vehicle 4 may be the cause of anomaly. In this case, the analysis unit 14 transmits the security log via a communication unit 16 to the server 100.

For example, when the security log only indicates that the communication cycle of data on the network of vehicle 4 is out of sync, the analysis unit 14 determines that there is no possibility that the anomaly is caused by an attack on the vehicle 4. In this case, the analysis unit 14 does not transmit the security log via the communication unit 16 to the server 100.

The communication unit 16 communicates with the server 100 via the wireless communication network 6. When the verification unit 18 is instructed by the server 100 to verify an integrity of own ECU or another ECU or an in-vehicle unit such as a VM or software operating on an ECU, the verification unit 18 verifies the in-vehicle unit. VM stands for Virtual Machine. The verification unit 18 is protected by a security function, such as hardware circuit, so that the verification unit 18 itself is not intruded by an attack.

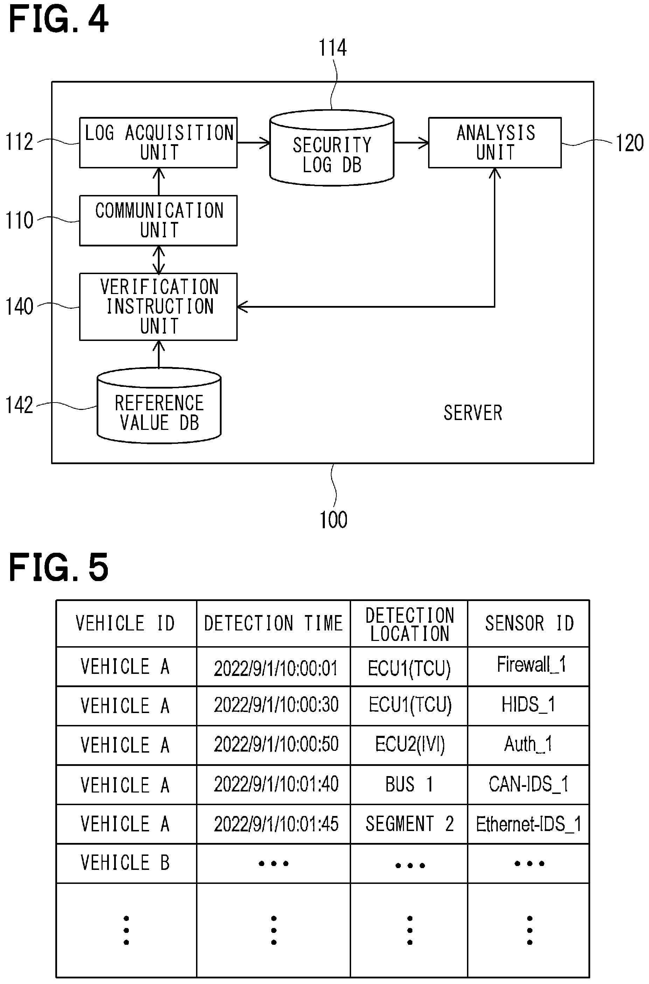

As shown in FIG. 4, the server 100 includes a communication unit 110, a log acquisition unit 112, a security log DB 114, an analysis unit 120, a verification instruction unit 140, and a reference value DB 142.

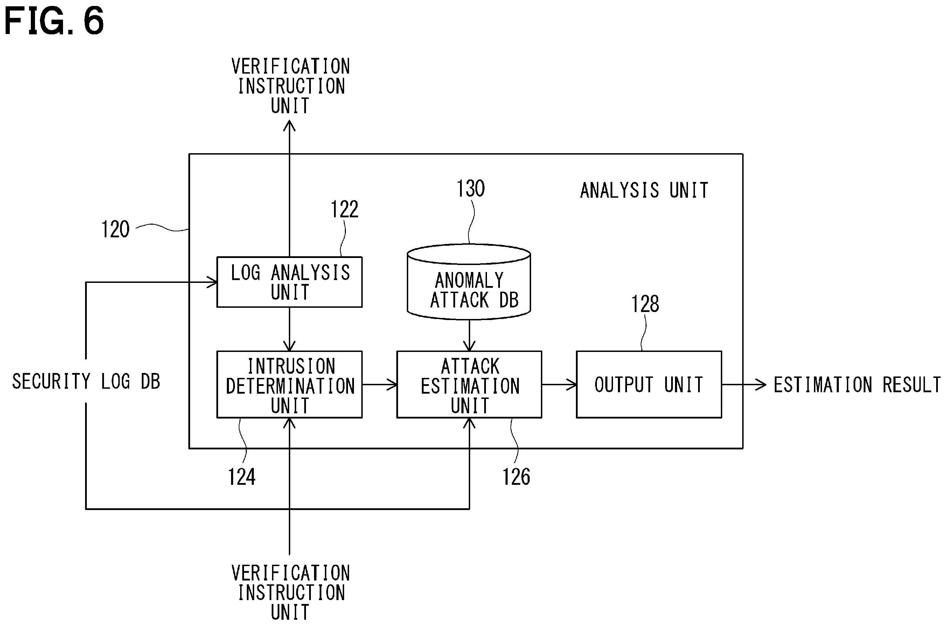

As shown in FIG. 6, the analysis unit 120 of the server 100 includes a log analysis unit 122, an intrusion determination unit 124, an attack estimation unit 126, an output unit 128, and an anomaly attack DB 130.

The server 100 is equipped with a computer including, for example, a CPU, a ROM, a RAM, a flash memory, and the like (not shown). When the CPU of the server 100 executes a program stored in a storage device, information processing is performed by the log acquisition unit 112, the log analysis unit 122, the intrusion determination unit 124, the attack estimation unit 126, and the verification instruction unit 140.

The communication unit 110 communicates with the vehicle 4 via the wireless communication network 6. The log acquisition unit 112 acquires the security log, which is transmitted from the vehicle 4 and is received by the communication unit 110, and stores the received security log in the security log DB 114.

As shown in FIG. 5, the security log acquired by the log acquisition unit 112 includes information, such as ID of the vehicle 4, detection time of anomaly, a location within the vehicle 4 where the anomaly is detected, and sensor ID that detected the anomaly. The security log may include other information.

The log analysis unit 122 determines whether to instruct the verification unit 18 of the vehicle 4 to verify the integrity of in-vehicle unit, based on the security log, which is acquired by the log acquisition unit 112 and is stored in the security log DB 114.

For example, when one or more of the following conditions (1) and (2) are satisfied, the log analysis unit 122 determines to instruct the verification unit 18 of the vehicle 4 to verify the integrity of in-vehicle unit.
(1) A security log is generated by a detection function of security sensor to detect an intrusion of vehicle by a cyberattack.
(2) A security log is generated as a result of defense performed by the second or subsequent layer of defense function in the above-described multi-layer defense system against an attack.

The log analysis unit may determine not to newly perform the integrity verification during the period from when the verification unit 18 of the vehicle 4 is instructed to verify the integrity until the integrity verification is completed.

The intrusion determination unit 124 determines whether the in-vehicle unit has been intruded, based on the result of the determination made by the verification instruction unit 140. The verification instruction unit 140 verifies the integrity of in-vehicle unit acquired from the verification unit 18 of the vehicle 4. The determination made by the verification instruction unit 140 based on result of integrity verification will be described later.

The attack estimation unit 126 estimates an attack that causes an intrusion based on the result of intrusion determination performed by the intrusion determination unit 124, the security log, and the anomaly attack table stored in the anomaly attack DB 130. The output unit 128 outputs the estimation result estimated by the attack estimation unit 126 to a DB or the like (not shown).

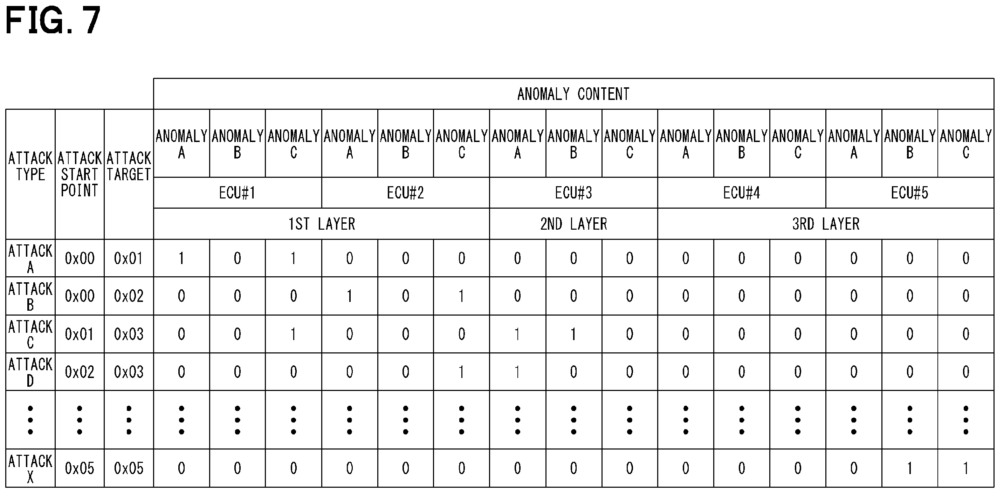

The anomaly attack DB 130 may include, for example, an anomaly attack table shown in FIG. 7. The anomaly attack DB 130 indicates a relation among the ECUs included in each layer of the multi-layer defense system, the types of anomalies that may occur in each ECU, the attacks that may cause occurrence of the anomalies in each ECU, the location of start point of attack, the location of attack target which is attacked from the start point of the attack, and the evaluation value. The path of attack is indicated by the location of start point of the attack and the location of attack target.

In the start point of attack, "0x00" indicates that the start point of attack is outside the vehicle 4. In the start point of attack and the attack target, "0x01" to "0x05" indicate the identification number of ECUs corresponding to the attack targets.

In FIG. 7, the evaluation values of "1" and "0" are values that are preset based on the system configuration of vehicle 4, attacks that are predicted to be made against the vehicle 4, and the anomalies that are predicted to occur as a result of attack. An evaluation value of "1" indicates that there is a possibility that the corresponding anomaly will occur when the vehicle receives an attack. An evaluation value of "0" indicates that the corresponding anomaly will not occur when the predicted attack is received.

In FIG. 7, the contents of anomaly are classified according to the type of anomaly occurring in the ECU. When multiple VMs are executed in each ECU, the contents of anomaly may be classified according to the types of anomalies occurring in each VM. When multiple software programs are executed in each ECU, the contents of anomaly may be classified according to the types of anomalies occurring in each software program.

Similar to the verification unit 18 of the vehicle 4, the verification instruction unit 140 is protected by a security function such as hardware circuit, so that the verification instruction unit 140 itself is not intruded by an attack.

When the log analysis unit 122 determines to instruct the integrity verification, the verification instruction unit 140 instructs the vehicle 4 to verify the integrity of in-vehicle unit that corresponds to a target of integrity verification.

The verification instruction unit 140 instructs the vehicle 4 to verify the integrity of in-vehicle unit in one of the following patterns (1) to (4).
(1) All in-vehicle units installed in the vehicle 4.
(2) An in-vehicle unit in which an anomaly is detected.
(3) An in-vehicle unit in which an anomaly is detected and a related in-vehicle unit that is physically or logically related to the in-vehicle unit in which the anomaly is detected.
   A related in-vehicle unit that is physically or logically related to the in-vehicle unit in which the anomaly is detected refers to, for example, an in-vehicle unit that is connected via a network to the in-vehicle unit in which the anomaly is detected, or an in-vehicle unit that performs a processing based on a processing result of the in-vehicle unit in which the anomaly is detected.
(4) An in-vehicle unit other than the in-vehicle unit in which the anomaly is detected. For example, when an anomaly is detected in a security sensor that has a high reliability for detecting an anomaly, the integrity of in-vehicle units other than the in-vehicle unit in which an anomaly is detected by the high-reliability security sensor.

The verification instruction unit 140 instructs the vehicle 4 to verify the integrity of in-vehicle unit, for example, for items (1) and (2) described below.
(1) A specific location of in-vehicle unit is any one of the following (1a) to (1d).
(1a) Determine whether a specific program code is stored in the memory. In this case, only program code that does not change during execution may be specified as the target of verification.
   The verification of program code may start from a program code that is likely to loose control when an attack is received.
(1b) Determine whether specific data is stored in the memory. For example, when the software is executed, determine whether data in a setting file of software that is loaded is a specific value or not. Alternatively, when the software is executed, determine whether generated control data of the software has a predetermined value. Only data that does not change when the software is executed may be specified as the target of verification.
(1c) Hardware configuration: For example, determine whether a device having a specific ID is connected. Alternatively, determine whether a specific interface is used.
(1d) Software configuration. For example, determine whether the software is configured with a specific library, whether the memory map of the software is in a specific configuration, or whether the dynamic library is of a specific version.
(2) All configurations of in-vehicle unit. For example, all of (1a) to (1d) described above.

The verification instruction unit 140 determines instruction order of the in-vehicle units for which the verification instruction unit 140 instructs the verification unit 18 of the vehicle 4 to verify the integrity, for example, in one of the following patterns (1) to (3).
(1) Instruct simultaneous verification of integrity for all of the in-vehicle units corresponding to the verification targets.
(2) Instruct verification of integrity of in-vehicle units included in a shallower layer of the multi-layer defense system prior to other in-vehicle units. For example, when an anomaly is detected in an in-vehicle unit included in the second layer, an instruction is made to verify the integrity of in-vehicle unit included in the first layer, which is shallower than the second layer, prior to the verification of in-vehicle unit included in the second layer.
(3) Instruct verification of integrity of in-vehicle units included in a deeper layer of the multi-layer defense system prior to other in-vehicle units. For example, when an anomaly is detected in an in-vehicle unit included in the first layer, an instruction is made to verify the integrity of in-vehicle unit included in the second layer, which is deeper than the first layer, prior to the verification of in-vehicle unit included in the first layer.

The verification instruction unit 140 compares the value of integrity verification result performed by the verification unit 18 with a normal value of integrity verification result stored in the reference value DB 142 to determine whether the integrity of in-vehicle unit is normal.

When the value of integrity verification result obtained by the verification unit 18 matches or is identical to the normal value stored in the reference value DB 142, the verification instruction unit 140 determines that the integrity of in-vehicle unit is maintained. When the value of integrity verification result obtained by the verification unit 18 does not match the normal value stored in the reference value DB 142, the verification instruction unit 140 determines that the integrity of in-vehicle unit is impaired.

### (2. Process)

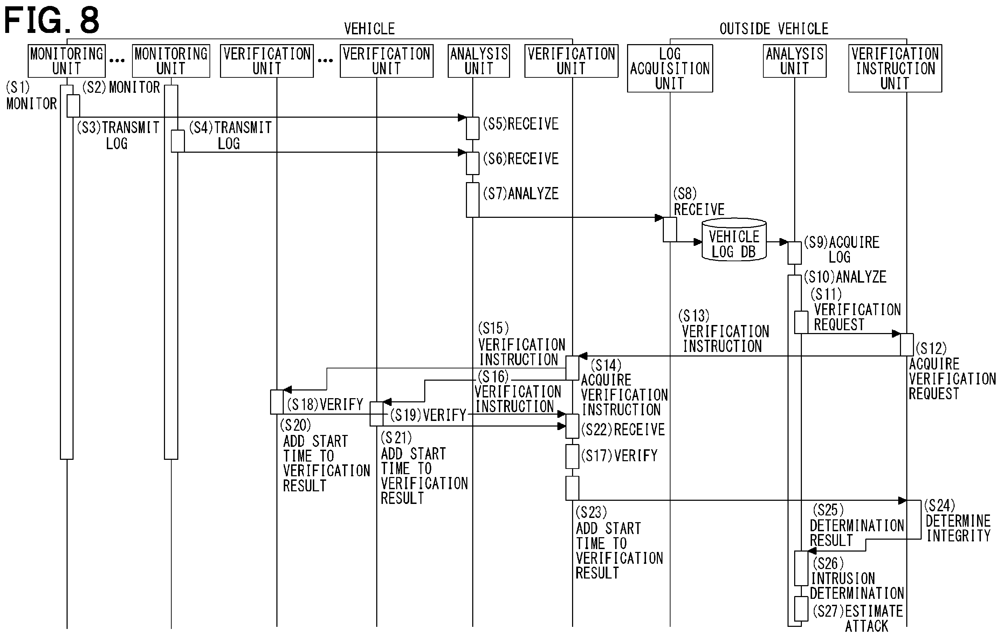

Based on FIG. 8, an information processing executed by the information processing system 2 including the ECUs 10, 20, 30, 40, 50, and 60 and the server 100 will be described.

In S1 and S2, the monitoring unit 12 of the vehicle 4 monitors whether an anomaly has occurred in the own ECU the network to which own ECU is connected. In S3 and S4, when the monitoring unit 12 detects an anomaly of in-vehicle unit, the monitoring unit transmits a security log to the analysis unit 14 of the vehicle 4. The security log includes a vehicle ID that identifies the vehicle 4, the detection time of anomaly, the location where the anomaly is detected, and the sensor ID of security sensor that detected the anomaly.

In S7, the analysis unit 14 analyzes the security log, which is received from the monitoring unit 12 in S5 and S6, as described above. Then, the analysis unit 14 determines whether the log needs to be transmitted to the server 100 or not. In response to determining that the log needs to be transmitted to the server 100, the analysis unit 14 transmits the security log via the communication unit 16 to the server 100.

In S8, the log acquisition unit 112 of the server 100 receives the security log transmitted from the vehicle 4 via the communication unit 110, and stores the received log in the security log DB 114 under the data structure shown in FIG. 5.

In S10, the log analysis unit 122 of the analysis unit 120 analyzes the security log, which is acquired from the security log DB 114 in S9, and determines whether to instruct the vehicle 4 to verify the integrity of in-vehicle unit of corresponding vehicle 4.

In S10, when the log analysis unit 122 determines that instruction to the vehicle 4 for the integrity verification of in-vehicle unit is necessary, the log analysis unit 122 requests the verification instruction unit 140 to instruct the vehicle 4 to verify the integrity of in-vehicle unit of the vehicle 4 in S11.

In S13, when the verification instruction unit 140 receives a request from the log analysis unit 122 in S12 to instruct verification of integrity of the in-vehicle unit of corresponding vehicle 4, the verification instruction unit 140 instructs the corresponding vehicle 4 to verify the integrity of in-vehicle unit.

In S15 and S16, for example, when the communication unit 16 of the ECU 50 receives the instruction to verify the integrity from the server 100 in S14, the verification unit 18 of the ECU 50 having the communication unit 16 instructs the relevant ECUs, including own ECU 50, to verify the integrity.

In S17, the verification unit 18 of the ECU 50 having the communication unit 16 verifies the integrity of own ECU 50 when own ECU 50 corresponds to the target of integrity verification.

In S18 and S19, the verification unit 18 of another ECU, which has been instructed by the verification unit 18 of the ECU 50, verifies the integrity of own ECU.

After verifying the integrity, the verification unit 18 adds the latest startup time of ECU to the result of integrity verification in S20 and S21, and transmits the integrity verification result to the ECU 50 having the communication unit 16.

In S23, the verification unit 18 of the ECU 50 having the communication unit 16 transmits the integrity verification result received from another ECU in S22 and the integrity verification result of own ECU 50 including the latest startup time of own ECU 50, to the server 100 via the communication unit 16.

In S24, the verification instruction unit 140 of the server 100 acquires the integrity verification result including the startup time from the vehicle 4 via the communication unit 110.

The verification instruction unit 140 executes a determination process to determine whether the integrity of verification target in-vehicle unit is maintained or not maintained, that is, impaired. The verification instruction unit 140 may further determine whether it is unable to determine a state of integrity of verification target, that is, maintained or impaired.

When the startup time of the in-vehicle unit is later than the detection time of anomaly, which indicates a time when the anomaly is detected in the in-vehicle unit and is stored in the security log DB114, the in-vehicle unit is started after the detection of anomaly, and the anomaly may be resolved when the verification of integrity is executed.

Thus, when the startup time is later than the detection time of anomaly, the verification instruction unit 140 cannot determine whether the integrity of in-vehicle unit is maintained.

When the anomaly detection time is later than the startup time, the in-vehicle unit does not restart from the detection time of anomaly until the integrity verification is performed, so it is possible to determine whether the integrity of in-vehicle unit is maintained based on the result of integrity verification.

When the detection time of anomaly is later than the startup time of in-vehicle unit, the verification instruction unit 140 reads out, from the reference value DB 142, reference-purpose verification result, which is a preset result in a case where the integrity verification is determined to be normal. Then, the verification instruction unit 140 determines whether the normal verification result matches or is identical to the verification result acquired from the vehicle 4.

When the normal verification result matches the acquired verification result, the verification instruction unit 140 determines that the integrity of in-vehicle unit is maintained. When the normal verification result does not match the acquired verification result, the verification instruction unit 140 determines that the integrity of in-vehicle unit is not maintained, that is, impaired.

In S25, the verification instruction unit 140 transmits the result of determination process for the above-mentioned verification result to the intrusion determination unit 124.

In S26, the intrusion determination unit 124 determines whether the in-vehicle unit is intruded or not, based on the determination result for the verification result obtained from the verification instruction unit 140.

When the integrity of in-vehicle unit is maintained, the intrusion determination unit 124 determines there is no intrusion to the in-vehicle unit.

When the integrity of in-vehicle unit is impaired, the intrusion determination unit 124 determines there is an intrusion to the in-vehicle unit.

When the intrusion determination unit 124 cannot determine whether the integrity of in-vehicle unit is maintained or impaired, whether the in-vehicle unit has been intruded cannot be determined.

In S27, the attack estimation unit 126 sets an evaluation value of attack that may cause an intrusion into the in-vehicle unit based on the determination result of intrusion determination unit 124, and then estimates what type of attack has been performed against the in-vehicle unit.

The attack estimation unit 126 increases, by a predetermined amount, the evaluation value of anomaly that is predicted to occur in the in-vehicle unit when the intrusion determination unit 124 has determined that the in-vehicle unit is intruded by an attack.

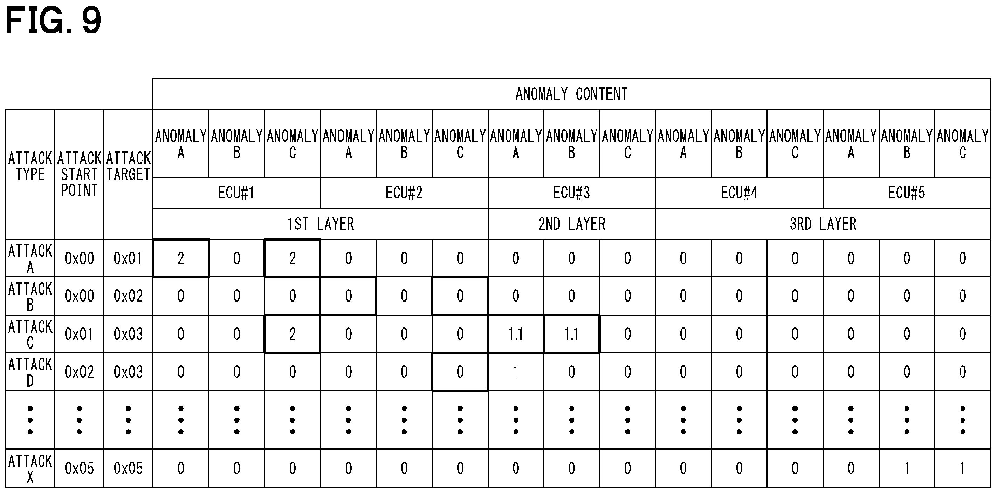

For example, in FIG. 7, when the ECU #1 is determined to be intruded, the attack estimation unit 126 increases the evaluation value of anomaly predicted to occur in the ECU #1 from the value "1" to the value "2" as shown in FIG. 9.

The attack estimation unit 126 decreases, by a predetermined amount, the evaluation value of anomaly that is predicted to not occur in the in-vehicle unit when the intrusion determination unit 124 determined that the in-vehicle unit is not intruded by an attack.

For example, in FIG. 7, when the ECU #2 is determined to be not intruded, the attack estimation unit 126 decreases the evaluation value of anomaly predicted to occur in the ECU #2 from the value "1" to the value "0" as shown in FIG. 9.

As described above, when the security logs are generated for the entry points of ECU #1 and ECU #2 in the same first layer, according to the result of integrity verification, the ECU #1 is determined to be attacked and the ECU #2 is determined to be not attacked.

For example, in the present embodiment, when the ECU #1 is a TCU and the ECU #2 is an IVI, the attack estimation unit determines that only the TCU is attacked.

In a case where the intrusion determination unit 124 is unable to determine whether the in-vehicle unit is intruded or not, the attack estimation unit 126 performs the following processing (1) or (2) to the evaluation value of anomaly that is predicted to occur in the corresponding in-vehicle unit.
(1) When an intrusion to the in-vehicle unit, which corresponds to the attack target, cannot be determined, in response to determining that an in-vehicle unit, which corresponds to the start point of attack, is intruded, the evaluation value of anomaly predicted to occur in the in-vehicle unit, which corresponds to the attack target, may be increased by a predetermined amount. The predetermined amount may be set smaller than a predetermined amount by which the evaluation value of the in-vehicle unit, which corresponds to the start point of attack, is increased.

The in-vehicle unit from which the attack starts and the in-vehicle unit corresponding to the target of attack are physically or logically related with one another via the network or the like. When the in-vehicle unit from which the attack starts is intruded by an attack, the in-vehicle unit corresponding to the target of attack may also be intruded by the attack.

For example, in FIG. 7, the ECU #3 is the target of attack C, and the attack C starts from ECU #1. Suppose that it is possible to determine that the ECU #1 is intruded by the attack, but it is unable to determine whether the ECU #3 is intruded by the attack. In this case, since the ECU #1 is intruded by the attack, the evaluation value of anomaly predicted to occur in the ECU #3 caused by the attack C may be increased by an amount smaller than an amount by which the evaluation value of the ECU #1 is increased. For example, the evaluation value of the ECU #1 may be increased from "1" to "2", and the evaluation value of the ECU #3 may be increased from "1" to "1.1".

(2) When an intrusion to a specific in-vehicle unit cannot be determined, suppose that (i) another in-vehicle unit, which corresponds to a start point of attack, is determined to be not intruded while the specific in-vehicle unit corresponds to the target of attack, or (ii) it is unable to determine whether another in-vehicle unit, which corresponds to a start point of attack, is intruded or not while the specific in-vehicle unit corresponds to the target of attack. In this case, the evaluation value of anomaly predicted to occur in the specific in-vehicle unit corresponding to the target of attack is maintained without change.

For example, in FIG. 7, the ECU #3 is the target of attack D and the attack D starts from the ECU #2. In a case where it is unable to determine whether the ECU #3 is intruded by an attack and the ECU #2, which corresponds to the start point of attack D, is determined to be not intruded, the attack estimation unit 126 does not change the evaluation value of anomaly A, which is predicted to occur in the ECU #3 in response to the attack D, by maintaining the value of "1."

For example, in FIG. 7, the ECU#5 is the start point and target of attack X. In a case where it is unable to determine whether the ECU #5 is intruded or not, the start point of attack X on the ECU #5 is the ECU #5 itself. Thus, the attack estimation unit 126 does not change the evaluation value of anomalies B and C, which are predicted to occur in the ECU #5 in response to the attack X, by maintaining the value of "1."

As described above, the attack estimation unit 126 adjusts the evaluation value of anomaly corresponding to the attacks, which are stored as an anomaly attack table in the anomaly attack DB 130 shown in FIG. 7, based on the result of integrity verification, as shown in FIG. 9. After adjusting the evaluation value, the attack estimation unit 126 estimates which attack type is occurred based on the adjusted table shown in FIG. 9.

The estimation of attack is performed by measuring a similarity between actual anomaly information and predicted anomaly information. The actual anomaly information indicates a combination of anomalies actually monitored in the vehicle 4. The predicted anomaly information indicates a combination of anomalies predicted to occur in the electronic control system when attacked by each attack type and evaluation values of the anomalies. As an example, the predicted anomaly information is stored as the anomaly attack table in the anomaly attack DB 130.

Specifically, the attack estimation unit calculates an inner product by multiplying a vector indicating data string of the actual anomaly information and a vector indicating data string of the predicted anomaly information. Then, the attack estimation unit extracts a row of anomaly attack table with the highest calculation result, which is obtained by dividing the inner product by the number of elements, which have values greater than zero among the vectors of predicted anomaly information. When the calculation result is equal to or greater than a predetermined value, it is estimated that the corresponding attack is carried out to the in-vehicle unit, which corresponds to the ECU.

For example, suppose that anomaly A, anomaly B, and anomaly C are observed in the ECU #1 as actual anomaly information. As shown in FIG. 9, in the case of attack A, the evaluation values of anomaly A and anomaly C in the ECU #1 are set to "2", and the evaluation value of anomaly B in the ECU #1 is set to "0". Thus, the calculation result of the inner product is 4. Since there are two anomalies, anomaly A and anomaly C, whose evaluation values are greater than 0. Thus, the result of dividing the inner product of 4 by the number of anomalies 2 is 2, which corresponds to the similarity between attack A and the actual anomaly information.

In the case of attack C as shown in FIG. 9, the evaluation value of anomaly C in the ECU #1 is set to "2", and the evaluation values of anomalies A and B in the ECU #1 are 0. Thus, the calculation result of inner product is 2. The anomalies with the evaluation values greater than 0 include the anomaly C in the ECU #1 and the anomalies A and B in the ECU #2. Thus, the result of dividing the inner product 2 by the number of anomalies 3 is two-thirds (2/3), which corresponds to the similarity between the attack C and the actual anomaly information.

Since the evaluation values of attacks B, D, and X corresponding to the anomalies A, B, and C of the ECU #1 are all 0, the final similarity is also 0. Therefore, the similarity between the attack A, which has the largest value, and the actual anomaly information is evaluated. Specifically, the similarity is compared with a predetermined value. When the similarity is equal to or greater than the predetermined value, the attack estimation unit estimates that the attack A is occurred.

In the above description, multiple examples have been described in which the evaluation value is increased by a predetermined amount or decreased by a predetermined amount. Instead of applying all of the examples described above, a part of the examples may be selectively applied.

When the attack estimation unit 126 estimates that an attack is occurred against the in-vehicle unit, the output unit 128 outputs the estimation result to a DB or the like (not shown).

### (3. Effects)

The embodiment described above provides the following effects.

(3a) Based on the integrity verification result of the in-vehicle unit verified based on the security log, it is possible to determine whether the in-vehicle unit is intruded by an attack on the vehicle 4 with high accuracy.

As a result, an attack on the vehicle 4 can be estimated with high accuracy based on the intrusion determination result indicating whether the in-vehicle unit has been intruded by an attack on the vehicle 4 and the security log indicating an anomaly caused by the intrusion.

(3b) When it is unable to determine whether a specific in-vehicle unit is intruded by an attack or not, in response to determining that another in-vehicle unit, which corresponds to the start point of the attack that has the specific in-vehicle unit as the target, is intruded by an attack, there is a possibility that the specific in-vehicle unit, which corresponds to the target of attack and is physically or logically related to another in-vehicle unit, is intruded by the attack.

Thus, in the above-described embodiment, when the in-vehicle unit that corresponds to the start point of attack is determined to be intruded by the attack and it is unable to determine whether an in-vehicle unit that corresponds to the target of attack is actually intruded by the attack or not, the evaluation value is increased by a predetermined amount smaller than the predetermined amount increased for the evaluation value of intruded in-vehicle unit. With this configuration, it is possible to set, with high accuracy, an evaluation value of anomaly that is predicted to occur in the in-vehicle unit when an anomaly is detected in the in-vehicle unit but it is unable to determine whether intrusion by attack is occurred or not.

(3c) Before transmitting the security log from the vehicle 4 to the server 100, the analysis unit 14 of the vehicle 4 analyzes, in advance, whether the security log is required to be transmitted to the server 100, i.e., whether to transmit the security log to the server 100. This configuration enables a decrease of communication traffic between the vehicle 4 and the server 100 as much as possible.

(3d) The security logs are generated for multiple in-vehicle units included in the same layer. Alternatively, based on the verification result of integrity, only a part of the in-vehicle units may be determined to be attacked and the remaining part of the in-vehicle units may be determined to be not attacked.

For example, in the present embodiment, the security logs are generated for the ECU#1 and the ECU#2. Based on the result of integrity verification, only the ECU#1 may be determined to be attacked and the ECU#2 may be determined to be not attacked. With this configuration, even though multiple ECUs are included in the same entry point, it is possible to determine, with high accuracy, which ECU is attacked based on the verification result of integrity.

(3e) The security log is used as a trigger to perform the integrity verification for the target in-vehicle unit. Thus, the processing load can be reduced compared to a case where the integrity of in-vehicle unit is periodically verified.

In the above-described embodiment, the ECUs 10, 20, 30, 40, 50, and 60 correspond to the in-vehicle information processing devices and in-vehicle units, and the server 100 corresponds to the information processing device outside the vehicle.

The process executed in S8 of FIG. 8 corresponds to the log acquisition unit 112. The process executed in S10 of FIG. 8 corresponds to the log analysis unit 122. The process executed in S13 of FIG. 8 corresponds to the verification instruction unit 140. The process executed in S17 to S19 of FIG. 8 correspond to the verification unit 18. The process executed in S26 corresponds to the intrusion determination unit 124. The process executed in S27 of FIG. 8 corresponds to the attack estimation unit 126.

The anomaly attack table indicated by the structure of anomaly attack DB 130 corresponds to a correspondence table between the type of anomaly, the attack, and the evaluation value.

### (4. Other Embodiments)

While the present disclosure has been described with reference to embodiments thereof, it is to be understood that the disclosure is not limited to the embodiments and constructions. The present disclosure is intended to cover various modification and equivalent arrangements. In addition, while the various combinations and configurations, other combinations and configurations, including more, less or only a single element, are also within the spirit and scope of the present disclosure.

(4a) In the embodiment described above, the server 100 located outside the vehicle has the functions of the log analysis unit 122, the intrusion determination unit 124, the attack estimation unit 126, and the verification instruction unit 140. The present disclosure is not limited to this configuration.

For example, the vehicle 4 may be equipped with functions of the log analysis unit 122, the intrusion determination unit 124, the attack estimation unit 126, and the verification instruction unit 140, in addition to the function of verification unit 18.

Alternatively, the vehicle 4 may not communicate with the server 100 and may have all of the functions of the verification unit 18, the log analysis unit 122, the intrusion determination unit 124, the attack estimation unit 126, and the verification instruction unit 140.

(4b) In the above-described embodiment, the server 100 is an information processing device located outside the vehicle, and performs the attack estimation process on multiple vehicles 4. The present disclosure is not limited to this configuration.

For example, a service tool or a personal computer may be connected to the vehicle 4 in wireless manner or in wired manner as an external information processing device, and attacks against the vehicle 4 may be estimated using one external information processing device prepared for each vehicle 4.

(4c) The above-described in-vehicle unit may be an information processing device configured by software, such as a VM, instead of a physical information processing device.

(4d) In the above-described embodiment, an anomaly attack table is used to estimate an attack on the vehicle 4. The present disclosure is not limited to this configuration. For example, an attack on the vehicle 4 may be estimated based on the security log and the integrity verification result without using an anomaly attack table.

(4e) The ECUs 10, 20, 30, 40, 50, 60, the server 100, and the method thereof described in the present disclosure may be implemented by a special purpose computer provided by configuring a processor and memory programmed to perform one or more functions embodied by a computer program.

Alternatively, the ECUs 10, 20, 30, 40, 50, 60, the server 100, and the method thereof described in the present disclosure may be implemented by a special purpose computer provided by configuring a processor with one or more dedicated hardware logic circuits.

Alternatively, the ECUs 10, 20, 30, 40, 50, 60, the server 100, and the method thereof described in the present disclosure may be implemented by one or more dedicated computers configured by a combination of a processor and a memory programmed to execute one or multiple functions and a processor configured by one or more hardware logic circuits.

The computer program may be stored in a computer-readable non-transitory tangible storage medium as instructions to be executed by the computer. The method of implementing the functions of components included in the ECUs 10, 20, 30, 40, 50, 60 and the server 100 does not necessarily have to include software, and all of the functions may be implemented by one or more hardware circuits.

(4f) The multiple functions of one component in the above embodiments may be implemented by multiple components, or a function of one component may be implemented by multiple components. Multiple functions of multiple elements may be implemented by one element, or one function implemented by multiple elements may be implemented by one element. A part of the configuration of the above embodiment may be omitted as appropriate. At least part of the configuration of the above embodiment may be added to or replaced with the configuration of another above embodiment.

(4g) The present disclosure is implemented by the ECUs 10, 20, 30, 40, 50, 60, each of which corresponds to the in-vehicle information processing device, and the server 100, which corresponds to the information processing device located outside the vehicle. Alternatively, the present disclosure may also be implemented in different forms, such as an information processing system 2 having the ECUs 10, 20, 30, 40, 50, 60 and the server 100 as components, an information processing program for causing a computer to function as the ECUs 10, 20, 30, 40, 50, 60 and the server 100, a non-transitory tangible storage medium such as a semiconductor memory on which the program is recorded, and an information processing method thereof.

### (Technical ideas disclosed in the present disclosure)

### (Technical idea 1)

An information processing device including:
a log acquisition unit (112, S8) acquiring a security log indicating an anomaly occurred in a vehicle (4);
a log analysis unit (122, S10) determining whether to instruct a verification unit (18, S17 to S19) of the vehicle to execute an integrity verification for verifying an integrity of an in-vehicle unit (10, 20, 30, 40, 50, 60) based on the security log acquired by the log acquisition unit;
a verification instruction unit (140, S13) instructing the verification unit to execute the integrity verification in response to the log analysis unit determining to instruct the verification unit to execute the integrity verification for the in-vehicle unit;
an intrusion determination unit (124, S26) determining whether the in-vehicle unit is intruded based on a result of the integrity verification executed by the verification unit; and
an attack estimation unit (126, S27) performing an estimation of an attack, which is a cause of intrusion, based on the security log and a result of intrusion determination obtained from the intrusion determination unit.

### (Technical idea 2)

The information processing device according to technical idea 1, wherein
the attack estimation unit increases an evaluation value of the attack causing the intrusion by a predetermined amount for the in-vehicle unit, which is determined, by the intrusion determination unit, to be intruded,
the attack estimation unit decreases an evaluation value of the attack causing the intrusion by a predetermined amount for the in-vehicle unit, which is determined, by the intrusion determination unit, to be not intruded, and
the attack estimation unit performs the estimation of the attack based on the increased or decreased evaluation value.

### (Technical idea 3)

The information processing device according to technical idea 2, wherein,
when the intrusion determination unit is unable to determine whether an in-vehicle unit is intruded or not, the attack estimation unit increases an evaluation value of the attack by an amount smaller than an increase amount of the in-vehicle unit, which is determined to be intruded by the intrusion determination unit and is logically or physically related to the in-vehicle unit for which the intrusion determination unit is unable to determine whether intruded.

### (Technical idea 4)

The information processing device according to technical idea 2 or 3, further comprising
a correspondence table indicating a relation among the in-vehicle unit, types of anomalies indicated by the security log, the attack, and evaluation values of the anomalies,
wherein the attack estimation unit performs the estimation of the attack based on a sum of the evaluation values of the anomalies, which is correspond to the attack in the correspondence table.

### (Technical idea 5)

The information processing device according to any one of technical ideas 1 to 4, wherein,
in response to the log analysis unit determining, based on the security log, to instruct the verification unit to execute the integrity verification, the verification instruction unit instructs the verification unit to execute the integrity verification for:
all of the in-vehicle units mounted on the vehicle; or
the in-vehicle unit for which the security log indicates the anomaly; or
an in-vehicle unit other than the in-vehicle unit for which the security log indicates the anomaly; or
the in-vehicle unit for which the security log indicates the anomaly and another in-vehicle unit physically or logically related to the in-vehicle unit for which the security log indicates the anomaly.

### (Technical idea 6)

The information processing device according to any one of technical ideas 1 to 5, wherein,
in response to the log analysis unit determining, based on the security log, to instruct the verification unit to execute the integrity verification, the verification instruction unit instructs the verification unit to verify, as the integrity verification, at least one of program code, data, hardware configuration, or software configuration.

### (Technical idea 7)

The information processing device according to any one of technical ideas 1 to 6, wherein
the verification instruction unit instructs the verification unit to execute the integrity verification when at least one of the following conditions is satisfied:
   the security log is generated by a detection function equipped to the vehicle in response to detection of the anomaly, or
   the security log is generated in response to a second or subsequent layer of a multi-layer defense system equipped to the vehicle defending against the attack, and
the verification instruction unit does not instruct the verification unit to execute the integrity verification when none of the above conditions is satisfied.

### (Technical idea 8)

The information processing device according to any one of technical ideas 1 to 7, wherein
the verification instruction unit does not instruct the verification unit to execute the integrity verification during a period from when the verification instruction unit instructs the verification unit to execute the integrity verification until the integrity verification is completed.

### (Technical idea 9)

The information processing device according to any one of technical ideas 1 to 8, wherein
the intrusion determination unit determines that the in-vehicle unit is intruded when the integrity of the in-vehicle unit is impaired,
the intrusion determination unit determines that the in-vehicle unit is not intruded when the integrity of the in-vehicle unit is maintained, and
the intrusion determination unit determines that it is unable to determine whether the in-vehicle unit is intruded or not when the integrity of the in-vehicle unit cannot be verified.

### (Technical idea 10)

An information processing program that causes a computer to function as the information processing device according to any one of technical ideas 1 to 9.

### (Technical idea 11)

An information processing method comprising:
acquiring a security log indicating an anomaly occurred in a vehicle (4);
determining whether to instruct a verification unit of the vehicle to execute an integrity verification for verifying an integrity of an in-vehicle unit based on the acquired security log;
in response to determining to instruct the verification unit to execute the integrity verification, instructing the verification unit to execute the integrity verification;
determining whether the in-vehicle unit is intruded based on a result of the integrity verification executed by the verification unit;
performing an estimation of an attack, which is a cause of intrusion, based on the security log and a result of intrusion determination that determines whether the in-vehicle unit is intruded.

### (Technical idea 12)

An information processing system comprising:
an in-vehicle information processing device (10, 20, 30, 40, 50, 60) mounted on a vehicle; and
an external information processing device (100) located outside the vehicle and communicating with the in-vehicle information processing device, wherein
the in-vehicle information processing device includes:
   a monitoring unit (12, S1, S2) generating a security log indicative of an anomaly occurred in the vehicle (4); and
   a verification unit (18, S17 to S19) executing an integrity verification for an in-vehicle unit (10, 20, 30, 40, 50, 60) mounted on the vehicle, and
the external information processing device includes:
   a log acquisition unit (112, S8) acquiring the security log from the in-vehicle information processing device;
   a log analysis unit (122, S10) determining whether to instruct the verification unit to execute the integrity verification for the in-vehicle unit based on the security log acquired by the log acquisition unit;
   a verification instruction unit (140, S13) instructing the verification unit to execute the integrity verification in response to the log analysis unit determining to instruct the verification unit to execute the integrity verification;
   an intrusion determination unit (124, S26) determining whether the in-vehicle unit is intruded based on a result of the integrity verification executed by the verification unit; and
   an attack estimation unit (126, S27) performing an estimation of an attack, which is a cause of intrusion, based on the security log and a result of intrusion determination obtained from the intrusion determination unit.

### (Technical idea 13)

An information processing method comprising:
generating a security log indicative of an anomaly occurred in a vehicle (4);
acquiring the generated security log;
determining whether to instruct an execution of integrity verification for an in-vehicle unit (10, 20, 30, 40, 50, 60) based on the acquired security log;
in response to determining to instruct the execution of integrity verification for the in-vehicle unit, instructing the execution of integrity verification;
in response to instructing the execution of integrity verification, executing the integrity verification;
determining whether the in-vehicle unit is intruded based on a result of the integrity verification; and
performing an estimation of an attack, which is a cause of intrusion, based on the security log and a result of intrusion determination that determines whether the in-vehicle unit is intruded.

## Claims

1. An information processing device comprising:
a log acquisition unit (112, S8) acquiring a security log indicating an anomaly occurred in a vehicle (4);
a log analysis unit (122, S10) determining whether to instruct a verification unit (18, S17 to S19) of the vehicle to execute an integrity verification for verifying an integrity of an in-vehicle unit (10, 20, 30, 40, 50, 60) based on the security log acquired by the log acquisition unit;
a verification instruction unit (140, S13) instructing the verification unit to execute the integrity verification in response to the log analysis unit determining to instruct the verification unit to execute the integrity verification for the in-vehicle unit;
an intrusion determination unit (124, S26) determining whether the in-vehicle unit is intruded based on a result of the integrity verification executed by the verification unit; and
an attack estimation unit (126, S27) performing an estimation of an attack, which is a cause of intrusion, based on the security log and a result of intrusion determination obtained from the intrusion determination unit.

2. The information processing device according to claim 1, wherein
the attack estimation unit increases an evaluation value of the attack causing the intrusion by a predetermined amount for the in-vehicle unit, which is determined, by the intrusion determination unit, to be intruded,
the attack estimation unit decreases an evaluation value of the attack causing the intrusion by a predetermined amount for the in-vehicle unit, which is determined, by the intrusion determination unit, to be not intruded, and
the attack estimation unit performs the estimation of the attack based on the increased or decreased evaluation value.

3. The information processing device according to claim 2, wherein, when the intrusion determination unit is unable to determine whether an in-vehicle unit is intruded or not, the attack estimation unit increases an evaluation value of the attack by an amount smaller than an increase amount of the in-vehicle unit, which is determined to be intruded by the intrusion determination unit and is logically or physically related to the in-vehicle unit for which the intrusion determination unit is unable to determine whether intruded.

4. The information processing device according to claim 2, further comprising
a correspondence table indicating a relation among the in-vehicle unit, types of anomalies indicated by the security log, the attack, and evaluation values of the anomalies,
wherein the attack estimation unit performs the estimation of the attack based on a sum of the evaluation values of the anomalies, which is correspond to the attack in the correspondence table.

5. The information processing device according to claim 1, wherein,
in response to the log analysis unit determining, based on the security log, to instruct the verification unit to execute the integrity verification, the verification instruction unit instructs the verification unit to execute the integrity verification for:
all of the in-vehicle units mounted on the vehicle; or
the in-vehicle unit for which the security log indicates the anomaly; or
an in-vehicle unit other than the in-vehicle unit for which the security log indicates the anomaly; or
the in-vehicle unit for which the security log indicates the anomaly and another in-vehicle unit physically or logically related to the in-vehicle unit for which the security log indicates the anomaly.

6. The information processing device according to claim 1, wherein,
in response to the log analysis unit determining, based on the security log, to instruct the verification unit to execute the integrity verification, the verification instruction unit instructs the verification unit to verify, as the integrity verification, at least one of program code, data, hardware configuration, or software configuration.

7. The information processing device according to claim 1, wherein
the verification instruction unit instructs the verification unit to execute the integrity verification when at least one of the following conditions is satisfied:
the security log is generated by a detection function equipped to the vehicle in response to detection of the anomaly; or
the security log is generated in response to a second or subsequent layer of a multi-layer defense system equipped to the vehicle defending against the attack, and
the verification instruction unit does not instruct the verification unit to execute the integrity verification when none of the above conditions is satisfied.

8. The information processing device according to claim 1, wherein
the verification instruction unit does not instruct the verification unit to execute the integrity verification during a period from when the verification instruction unit instructs the verification unit to execute the integrity verification until the integrity verification is completed.

9. The information processing device according to claim 1, wherein
the intrusion determination unit determines that the in-vehicle unit is intruded when the integrity of the in-vehicle unit is impaired,
the intrusion determination unit determines that the in-vehicle unit is not intruded when the integrity of the in-vehicle unit is maintained, and
the intrusion determination unit determines that it is unable to determine whether the in-vehicle unit is intruded or not when the integrity of the in-vehicle unit cannot be verified.

10. An information processing program that causes a computer to function as the information processing device according to any one of claims 1 to 9.

11. An information processing method comprising:
acquiring a security log indicating an anomaly occurred in a vehicle (4);
determining whether to instruct a verification unit of the vehicle to execute an integrity verification for verifying an integrity of an in-vehicle unit based on the acquired security log;
in response to determining to instruct the verification unit to execute the integrity verification, instructing the verification unit to execute the integrity verification;
determining whether the in-vehicle unit is intruded based on a result of the integrity verification executed by the verification unit; and
performing an estimation of an attack, which is a cause of intrusion, based on the security log and a result of intrusion determination that determines whether the in-vehicle unit is intruded.

12. An information processing system comprising:
an in-vehicle information processing device (10, 20, 30, 40, 50, 60) mounted on a vehicle; and
an external information processing device (100) located outside the vehicle and communicating with the in-vehicle information processing device,
wherein
the in-vehicle information processing device includes:
a monitoring unit (12, S1, S2) generating a security log indicative of an anomaly occurred in the vehicle (4); and
a verification unit (18, S17 to S19) executing an integrity verification for an in-vehicle unit (10, 20, 30, 40, 50, 60) mounted on the vehicle, and
the external information processing device includes:
a log acquisition unit (112, S8) acquiring the security log from the in-vehicle information processing device;
a log analysis unit (122, S10) determining whether to instruct the verification unit to execute the integrity verification for the in-vehicle unit based on the security log acquired by the log acquisition unit;
a verification instruction unit (140, S13) instructing the verification unit to execute the integrity verification in response to the log analysis unit determining to instruct the verification unit to execute the integrity verification;
an intrusion determination unit (124, S26) determining whether the in-vehicle unit is intruded based on a result of the integrity verification executed by the verification unit; and
an attack estimation unit (126, S27) performing an estimation of an attack, which is a cause of intrusion, based on the security log and a result of intrusion determination obtained from the intrusion determination unit.

13. An information processing method comprising:
generating a security log indicative of an anomaly occurred in a vehicle (4);
acquiring the generated security log;
determining whether to instruct an execution of integrity verification for an in-vehicle unit (10, 20, 30, 40, 50, 60) based on the acquired security log;
in response to determining to instruct the execution of integrity verification for the in-vehicle unit, instructing the execution of integrity verification;
in response to instructing the execution of integrity verification, executing the integrity verification;
determining whether the in-vehicle unit is intruded based on a result of the integrity verification; and
performing an estimation of an attack, which is a cause of intrusion, based on the security log and a result of intrusion determination that determines whether the in-vehicle unit is intruded.
